# EUROPÄISCHE PATENTSCHRIFT

(11) **EP 0 363 810 B1**
(45) Veröffentlichungstag und Bekanntmachung des Hinweises auf die Patenterteilung: **04.05.1994**
(21) Anmeldenummer: 89118436.8
(22) Anmeldetag: 04.10.1989
(51) Int. Cl.: F16P 3/08, B02C 18/00, B30B 9/30

(54) **Schutzsabdeckung für einen mit einer Ballenpresse kombinierten Aktenvernichter**
Protective cover for a file shredder combined with a baling press
Capot de protection pour déchiqueteur à papier combiné avec des presse-balles

(30) Priorität: 18.10.1988 DE 3835450
(43) Veröffentlichungstag der Anmeldung: 18.04.1990
(73) Patentinhaber: H S M - PRESSEN GmbH, D-88678 Salem (DE)
(72) Erfinder: Schwelling, Hermann, D-7777 Salem 3 / Neufrach (DE)
(74) Vertreter: Seemann, Norbert W., Dipl.-Ing.

(56) Entgegenhaltungen:
- DE-A- 2 201 327
- GB-A- 648 196
- US-A- 3 752 063
- US-A- 3 754 498
- US-A- 3 754 500

## Beschreibung

Die Erfindung bezieht sich auf eine Schutzabdeckung nach dem Oberbegriff des Patentanspruches 1.

Problematik und Aufgabenstellung hierbei ist zum einen, eine einwandfreie Schnittgutübergabe vom Aktenvernichter an eine sog. Füllklappenpresse zu erreichen und dabei zugleich sicherzustellen, daß absoluter Handschutz für die Bedienungsperson gegeben ist. Zugleich soll die Presse aber auch als Einzelgerät, also ohne Aktenvernichter betreibbar sein.

Die Kombination eines Papierschredders mit einer Ballenpresse ist zwar bereits aus der US-PS 37 54 498 bekannt, jedoch ist zum einen diese Gerätekombination nicht voneinander lösbar und separat verwendbar, und zum anderen hat die dort vorhandene Preßschachttür lediglich eine Öffnungs- und eine Schließstellung und bietet keinen Schutz für das Bedienungspersonal zum Aktenvernichterschneidwerk hin.

Gelöst wird die eingangs erwähnte Aufgabe daher erst durch die im Patentanspruch 1 angegebenen Mittel und Maßnahmen.
Die Unteransprüche beinhalten vorteilhafte Weiterbildungen hierzu.
Die zur Verdeutlichung der Erfindung sowie der folgenden Beschreibung dienenden Zeichnungen zeigen im einzelnen:
- Fig. 1: eine weitestgehend schematische Seitenansicht der neuen Lösung bei Aktenvernichter/Pressenbetrieb;
- Fig. 2: desgleichen bei reinem Pressenbetrieb und

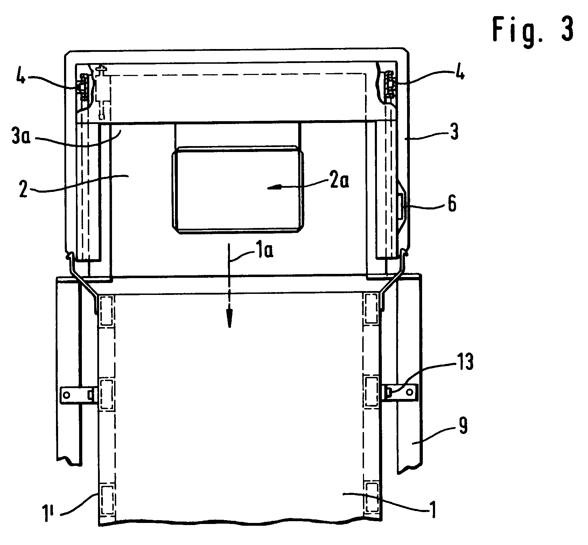

- Fig. 3: eine Teildraufsicht zu Fig. 1.

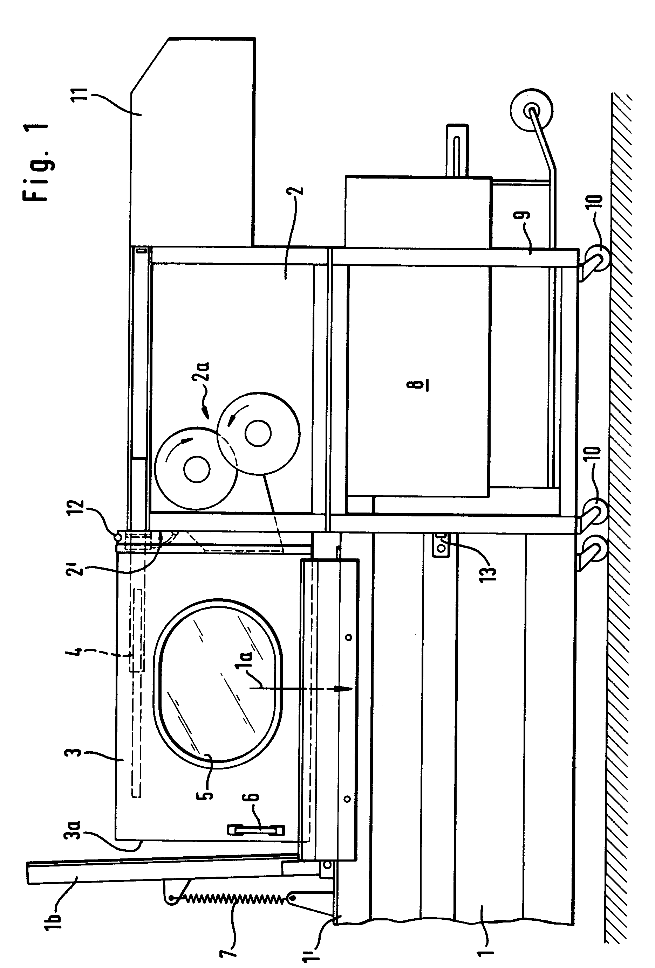

Bei der in Fig. 1 dargestellten Kombination ist zu ersehen, daßdie Abdeckung als an ihren beiden Stirnseiten 3a und 3b offene Haube 3 ausgebildet ist, die bei Inbetriebnahme des Aktenvernichters 2 die Einfüllschachtöffnung 1a des Pressengehäuses 1 annähernd vollständig überdeckt, wobei das pressenseitig offene Ende 3a der Abdeckhaube 3 annähernd bis an die geöffnete Einfüllschachttür 1b des Pressengehäuses 1 heranreicht.

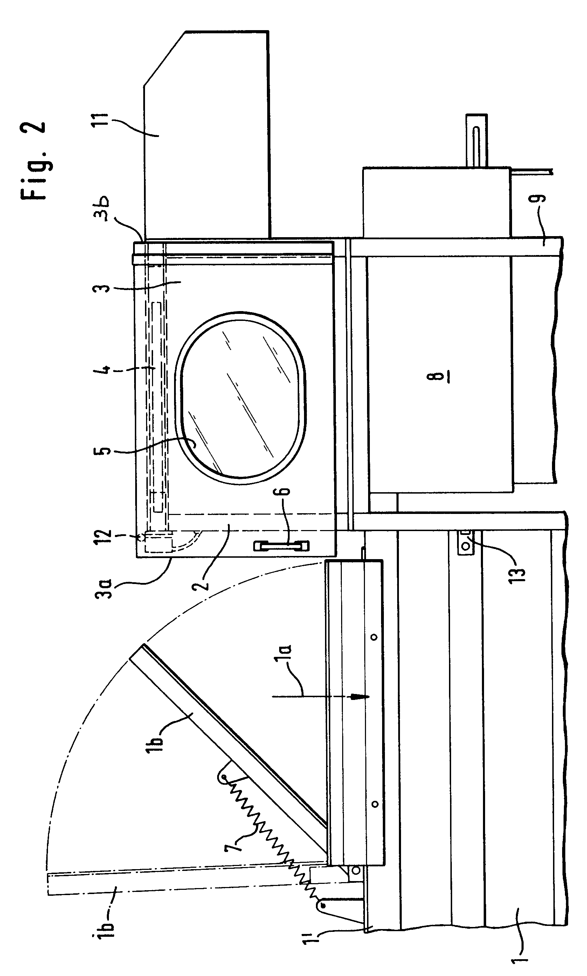

In spezieller baulicher Ausgestaltung ist dabei weiterhin noch vorgesehen, daß die Haube 3 horizontal verschieblich auf teleskopartig ausfahrbaren Laufschienen 4 am Aktenvernichtergehäuse 2 gelagert und bei reinem Pressenbetrieb über letzteres 2 zurückgeschoben ist; Fig.2 veranschaulicht diesen Betriebszustand. Außerdem besitzt diese Abdeckhaube 3 noch mindestens eine seitliche Schauöffnung 5 und einen Schwenk- bzw. Schiebegriff 6.

Wichtig für den Betrieb dieser Kombination ist zudem noch die schaltungsmäßige Verknüpfung von Presse 1 und Aktenvernichter 2 in der Form, daß das Schneidwerk 2a des letzteren 1 nur einschaltbar ist, wenn sich die Abdeckhaube 3 gänzlich über der Einfüllschachtöffnung 1a der Presse 1 bei gleichzeitig geöffneter Einfüllschachttür 1b befindet; die Fig. 1 deutet diesen Betriebszustand an.

Nicht dargestellt sind letztlich noch folgende Variationsmöglichkeiten der Schutzabdeckung:
a) Die Abdeckhaube 3 ist hochklappbar an der Schneidwerksstirnseite 2' des Aktenvernichtergehäuses 2 angelenkt.
b) Die Abdeckhaube 3 ist seitlich abschwenkbar an einer der Preßschachtlängsseiten 1′ angeordnet, mit bei a) und b) analoger schaltungsmäßiger Antriebsverknüpfung wie in Anspruch 4.

Wichtig bei allen Lösungsvarianten ist dabei, daß generell die Abdeckhaube bei Inbetriebnahme des Aktenvernichters in einer Stellung zur geöffneten Einfüllklappe steht, bei der mit der Hand von einer Bedienungsperson nicht mehr in den Bereich des Schneidwerkauslaufs des Aktenvernichters gegriffen werden kann und letzterer sofort stromlos wird, wenn die Abdeckhaube auch nur das kleinste Stück aus ihrer Schutzlage herausbewegt wird.

| Bezugsziffernverzeichnis | | | |
|---|---|---|---|
| 1 | Ballenpresse | 1' | Längsseite |
| 1a | Einfüllöffnung | | |
| 1b | Einfüllschachttür | | |
| 2 | Aktenvernichter | 2' | Stirnseite |
| 2a | Schneidwerk | | |
| 3 | Abdeckhaube | | |
| 3a, 3b | offene Seite | | |
| 4 | Teleskopschiene | | |
| 5 | Schauöffnung | | |
| 6 | Griff | | |
| 7 | Zugfeder | | |
| 8 | Pressenantrieb | | |
| 9 | Aktenvernichtergestell | | |
| 10 | Laufrollen | | |
| 11 | Ablage | | |
| 12 | Schalter | | |
| 13 | Schalter | | |

## Patentansprüche

1. Schutzabdeckung für einen mit einer Ballenpresse kombinierten Aktenvernichter (2), der stirnseitig und oberhalb der Einfüllschachtöffnung (1a) des Pressengehäuses (1) lösbar an diesem angeordnet ist,
**dadurch gekennzeichnet,**
daß die Abdeckung als an ihren beiden Stirnseiten (3a und 3b) offene Haube (3) ausgebildet ist, die bei Inbetriebnahme des Aktenvernichters (2) die Einfüllschachtöffnung (1a) des Pressengehäuses (1) annähernd vollständig überdeckt, wobei das pressenseitig offene Ende (3a) der Abdeckhaube (3) annähernd bis an die geöffnete Einfüllschachttür (1b) des Pressengehäuses (1) heranreicht.

2. Schutzabdeckung nach Anspruch 1,
**dadurch gekennzeichnet,**
daß die Abdeckhaube (3) horizontal verschieblich auf teleskopartig ausfahrbaren Laufschienen (4) seitlich am Aktenvernichtergehäuse (2) gelagert und bei reinem Pressenbetrieb über letzteres (2) geschoben ist.

3. Schutzabdeckung nach den Ansprüchen 1 und 2,
**dadurch gekennzeichnet,**
daß die Abdeckhaube (3) mindestens eine seitliche Schauöffnung (5) und einen Betätigungsgriff (6) aufweist.

4. Schutzabdeckung nach den Ansprüchen 1 bis 3,
**gekennzeichnet durch**
schaltungsmäßige Verknüpfung von Presse und Aktenvernichter (2) in der Form, daß das Schneidwerk (2a) des letzteren (2) nur einschaltbar ist, wenn sich die Abdeckhaube (3) gänzlich über der Einfüllschachtöffnung (1a) des Pressengehäuses (1) bei gleichzeitig geöffneter Einfüllschachttür (1b) befindet.

## Claims

1. Protective cover for a shredding machine (2) which is combined with a bale press and which at the front and top of the filler shaft opening (1a) of the press housing (1) is detachably arranged thereat, characterised thereby that the cover is constructed as a hood (3) which is open at its two end faces (3a and 3b) and which on putting of the shredding machine (2) into operation nearly completely covers over the filler shaft opening (1a) of the press housing (1), wherein the open end (3a) of the cover hood (3) at the side of the press reaches almost to the opened filler shaft door (1b) of the press housing (1).

2. Protective cover according to claim 1, characterised thereby that the cover hood (3) is mounted to be horizontally displaceable on telescopically movable guide rails (4) laterally at the shredding machine housing (2) and during pure press operation is pushed over the latter (2).

3. Protective cover according to claims 1 and 2, characterised thereby that the cover hood (3) has at least one lateral inspection opening (5) and an actuating handle (6).

4. Protective cover according to claims 1 to 3, characterised by circuit-like linking of press and shredding machine (2) in the manner that the cutter (2a) of the latter (2) can be switched on only if the cover hood (3) is disposed entirely over the filler shaft opening (1a) of the press housing (1) when the filler shaft door (1b) is open at the same time.

## Revendications

1. Recouvrement de protection pour un déchiqueteur de papier (2) combiné à un presse-balles, qui est disposé de façon amovible sur le carter de la presse (1), sur la face frontale et au-dessus de l'ouverture de la trémie de remplissage (1a) de ce carter, caractérisé en ce que le recouvrement est réalisé en tant que capot (3) ouvert sur ses deux faces frontales (3a et 3b) et qui, lors de la mise en marche du déchiqueteur de papier (2), recouvre presque entièrement l'ouverture de la trémie de remplissage (1a) du carter de la presse (1), sachant que l'extrémité (3a) du capot de recouvrement (3) qui est ouverte du côté de la presse arrive approximativement jusqu'à la porte de la trémie de remplissage (1b) du carter de la presse (1) qui est ouverte.

2. Recouvrement de protection selon la revendication 1, caractérisé en ce que le capot de recouvrement (3) est monté sur le côté du carter du déchiqueteur de papier (2) de façon à pouvoir se déplacer horizontalement sur des rails de guidage (4) pouvant être déployés à la manière d'un télescope et, lorsque la machine fonctionne uniquement en mode presse, est coulissé par-dessus ce carter (2).

3. Recouvrement de protection selon les revendications 1 et 2, caractérisé en ce que le capot de recouvrement (3) présente au moins une ouverture d'observation (5) et une poignée d'actionnement (6).

4. Recouvrement de protection selon les revendications 1 à 3, caractérisé par un circuit logique entre la presse et le déchiqueteur de papier (2) réalisé de manière à ce que l'outil de coupe (2a) de ce dernier (2) ne puisse être mis en marche que lorsque le capot de recouvrement (3) se trouve entièrement au-dessus de l'ouverture de la trémie de remplissage (1a) du carter de la presse (1) et que simultanément la porte de la trémie de remplissage (1b) est ouverte.
